**Europäisches Patentamt**

**European Patent Office**

**Office européen des brevets**

(19)

(11) Veröffentlichungsnummer : **0 167 580**
**B1**

(12) # EUROPÄISCHE PATENTSCHRIFT

(45) Veröffentlichungstag der Patentschrift :
**02.03.88**

(21) Anmeldenummer : **85900463.2**

(22) Anmeldetag : **21.12.84**

(86) Internationale Anmeldenummer :
**PCT/EP 84/00425**

(87) Internationale Veröffentlichungsnummer :
**WO/8503054 (18.07.85 Gazette 85/16)**

(51) Int. Cl.⁴ : **B 65 B 35/24**

(54) **VORRICHTUNG ZUM EINSPEISEN VON WARENSTÜCKEN IN EINE PACKMASCHINE.**

(30) Priorität : **04.01.84 DE 3400172**

(43) Veröffentlichungstag der Anmeldung :
**15.01.86 Patentblatt 86/03**

(45) Bekanntmachung des Hinweises auf die Patenterteilung : **02.03.88 Patentblatt 88/09**

(84) Benannte Vertragsstaaten :
**AT BE CH FR GB LI LU NL SE**

(56) Entgegenhaltungen :
**WO-A-84 /007 35**
**CH-A- 547 733**
**GB-A- 2 033 327**
**US-A- 2 605 597**
**US-A- 3 900 096**

(73) Patentinhaber : **Otto Hänsel GmbH**
**Lister Damm 19**
**D-3000 Hannover (DE)**

(72) Erfinder : **LESCH, Hans**
**Griesstrasse 5**
**D-8100 Garmisch-Partenkirchen (DE)**

(74) Vertreter : **Patentanwälte Dipl.-Ing. Rudolf Bibrach**
**Dipl.-Ing. Elmar Rehberg et al**
**Postfach 1453 Pütterweg 6**
**D-3400 Göttingen (DE)**

## Beschreibung

Die Erfindung betrifft eine Vorrichtung zum kontinuierlichen Zuführen von im wesentlichen quaderförmigen, flachen Warenstücken, insb. Schokoladetafeln oder -riegeln, bei einer die Warenstücke in einen horizontal geführten Hüllmaterialschlauch einhüllenden Packmaschine, in der ein quer zur Haupttransportrichtung verlaufender Zubringer die Warenstücke in einen endlos, in konstanter Geschwindigkeit umlaufenden, mit seitlich vorragenden Mitnehmern versehenen Förderer übergibt.

Eine ähnliche Einrichtung zeigt bereits die CH-A 547 733. Hier werden Stapel scheibenförmiger Gegenstände, wie etwa Biscuits auf einem Förderband zwischen Mitnehmern herangeführt und in einen Hüllmaterialschlauch gegeben. Beim Eintritt in den Hüllmaterialschlauch werden die Mitnehmer seitlich aus diesem herausgezogen, so daß der Schlauch anschließend verschlossen und in Einzelpackungen unterteilt werden kann. Die Mitnehmer dienen hier dazu, die Stapel der scheibenförmigen Gegenstände beim Transport zu sichern, so daß ein Auseinanderfallen ausgeschlossen ist. Die Leistung der Einrichtung ist beschränkt, da die Stapel einzeln zwischen die Mitnehmer einzuführen sind. Dies kann nur mit größter Vorsicht erfolgen, da sonst die Stapel auseinanderfallen. Für hohe Packleistungen ist diese Einrichtung ungeeignet.

Die US-A 3 900 096 zeigt eine Einrichtung gemäß dem Oberbegriff des Anspruchs 1, mit welcher in einer Staustrecke auflaufende Warenstücke in eine quer dazu verlaufende Transporteinrichtung eingetaktet werden. Hierzu ist eine besondere Vorrichtung vorgesehen, die eine umlaufende Kette aufweist, welche auf ihrer Außenseite mit fachförmigen Mitnehmern ausgestattet ist. Die Kette verläuft dabei in einem schrägen Winkel zwischen der Staustrecke und der Transportvorrichtung. Das jeweils erste Packstück in der Staustrecke wird von einem Mitnehmer an der Förderkette erfaßt und über eine parallel zur Förderkette verlaufende schiefe Ebene geführt und zwischen die Mitnehmer der Transportvorrichtung abgelegt. Das jeweils erste Packstück der Staustrecke wird beim Erfassen durch die Mitnehmer durch diese und durch den Staudruck in der Staustrecke belastet. Mit dieser Einrichtung lassen sich daher nur unempfindliche und formstabile Warenstücke verpacken.

Aufgabe der Erfindung ist es diese Mängel zu beheben und eine Vorrichtung zu schaffen, die bei hoher Packleistung die mechanische Belastung der Warenstücke so gering wie möglich hält, so daß sich auch die empfindlichsten Warenstücke in eine allseits dichtschließende Verpackungshülle einbringen und sorgfältig umschließen lassen.

Dies wird erfindungsgemäß dadurch erreicht, daß die Mitnehmer des endlosen Förderers quer zu dessen Förderrichtung in den Auslaufbereich des Zubringers hinein- und wieder zurückgesteuert verschiebbar ausgebildet sind und die erfaßten Warenstücke in den Schlauchbildner überführen und daß am endlosen Förderer jeweils zwischen den Mitnehmern entsprechend quer zu dessen Förderrichtung gesteuerte Puffer für die auf dem Zubringer ankommenden Warenstücke vorgesehen sind. Dabei ist eine die Puffer und die Mitnehmer steuernde Vorrichtung vorgesehen, um das jeweils vorderste Warenstück aus dem Zubringer vermittels des jeweiligen Puffers ohne Staudruck der folgenden Warenstücke bei der Querbewegung der Mitnehmer abzuführen.

Vorzugsweise sind an sich bekannte Schließorgane für den Hüllmaterialschlauch vorgesehen, die nach Entfernung der Mitnehmer die Längsränder des Hüllmaterialschlauches durch Verschweißung oder Verklebung miteinander verbinden. Der Zubringer ist vor dem Schlauchbildner angeordnet. Die Mitnehmer sind mittels einer Steuereinrichtung gegenüber dem sie tragenden Transportorgan quer zu dessen Förderrichtung bis in den Arbeitsbereich des Zubringers verschiebbar und mit dem erfaßten Warenstück zunächst bis in den Einzugsbereich des Schlauchbildners zurückziehbar und nach erfolgter Schlauchbildung aus dem Schlauch vor dessen Verschluß entfernbar.

Vorzugsweise sind dabei die Mitnehmer in Führungen quer auf dem sie tragenden Transportorgan verschiebbar geführt und an eine sie betätigende Steuereinrichtung angeschlossen. Diese Steuereinrichtung für die Mitnehmer ist aus einer sich über die Länge des Förderorgans hinwegerstreckenden Kurvenführung, wie z. B. Nutkurve od. dgl., und aus in diese einfassenden, am Schaft der Mitnehmer sitzenden Laufrollen gebildet.

Um eine sichere, störungsfreie Beschickung der Maschine zu fördern, sind auf dem die Mitnehmer tragenden Transportorgan zwischen den Mitnehmern Puffer verschiebbar angeordnet, die mit ihrem Kopf die in den Zubringer zugeführten Warenstücke einseitig abstützen. Für die Steuerung der Puffer ist eine sich in Förderrichtung erstreckende Kurvenführung vorgesehen, in der sich die Puffer mit entsprechenden Führungsrollen führen. Schließlich kann seitlich von dem Zubringer eine Leitvorrichtung zur weiteren Einsteuerung der Warenstücke in Richtung des Hüllmaterialschlauches vorgesehen sein.

Der Erfindungsgedanke läßt die verschiedensten Ausführungsmöglichkeiten zu. Eine davon ist in der anliegenden Zeichnung wiedergegeben, und zwar zeigen :

Fig. 1 eine schematische Darstellung des Einlaufteiles einer Packmaschine in Vorderansicht ;

Fig. 2 eine Draufsicht auf den gleichen Teil einer Packmaschine gemäß Fig, 1 ;

Fig. 3 bis 5 Teildarstellungen aus Fig. 2 bei verschiedenen Arbeitsstellungen der Mitnehmer und

Fig. 6 eine Ansicht in Richtung des Pfeiles A in Fig. 2.

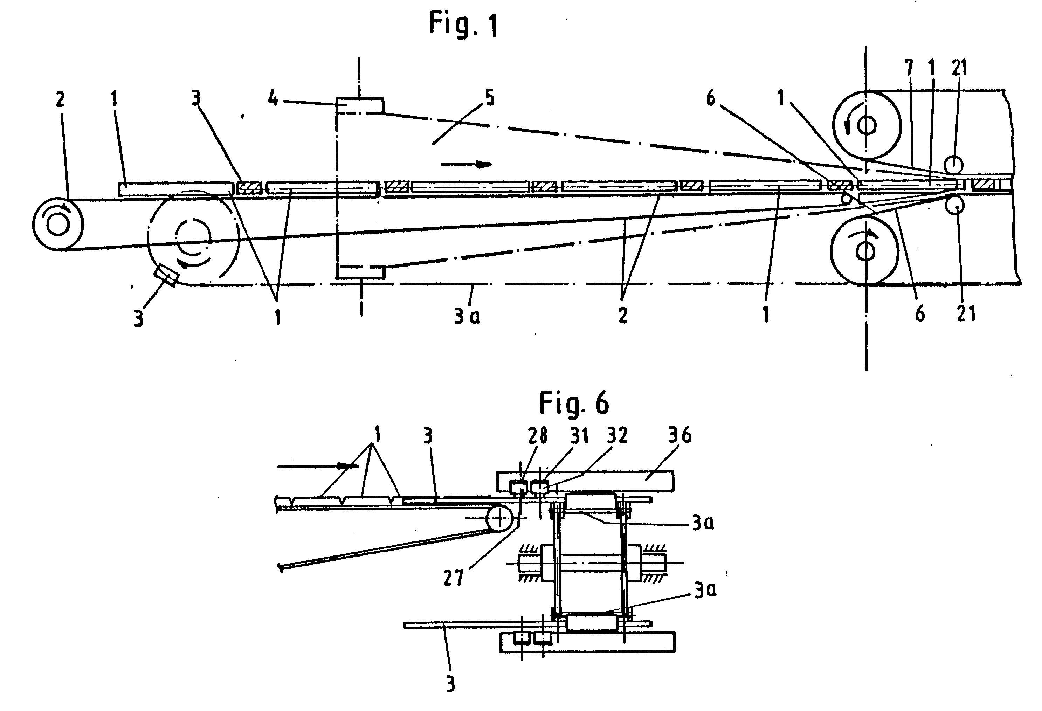

Die zu verpackenden Warenstücke sind im vorliegenden Falle beispielsweise rechteckige Schokoladetafeln 1, die, gemäß Fig. 1 auf einem Förderband 2 einem Schlauchbildner zugeführt werden. Der Transport der Warenstücke 1 auf dem Band 2 wird durch Mitnehmer 3 unterstützt, die hintereinander auf einem neben dem Zubringeband 2 angeordneten Transportorgan 3a sitzen. Funktion und Arbeitsweise der Mitnehmer werden später noch erläutert. Das Hüllmaterial, beispielsweise eine Verpackungsfolie 5, eine heißsiegelfähige Aluminiumfolie od. dgl., wird von einer um eine senkrechte Achse umlaufende Vorratsrolle 4 abgezogen und von der Seite her U-förmig um den Tafelstrom herumgelegt werden.

Es wird ein Hüllmaterialschlauch von U-förmigem Querschnitt gebildet, der an einer Seite offen ist und in den die Schokoladetafeln 1 der Länge nach einlaufen. Schließlich läuft der Hüllmaterialschlauch 5 mit den darin eingeschlossenen Warenstücken 1 zwischen ein Förderbandpaar 6, 7 ein, wobei die Bänder 6 und 7 über Führungsrollen 21 laufen. Der weitere Aufbau und die Arbeitsweise der Packmaschine bilden den Gegenstand der älteren deutschen Anmeldung P 32 30 083.2-27, so daß hier eine weitere Erläuterung unterbleiben kann. Wichtig ist, daß lediglich nach Einführung der Warenstücke in den Hüllmaterialschlauch dieser an seinen Längsrändern durch Verschweißung oder Verklebung verschlossen wird, worauf der nunmehr verschlossene Hüllmaterialschlauch zwischen den aufeinanderfolgenden Warenstücken verschweißt und zerteilt wird.

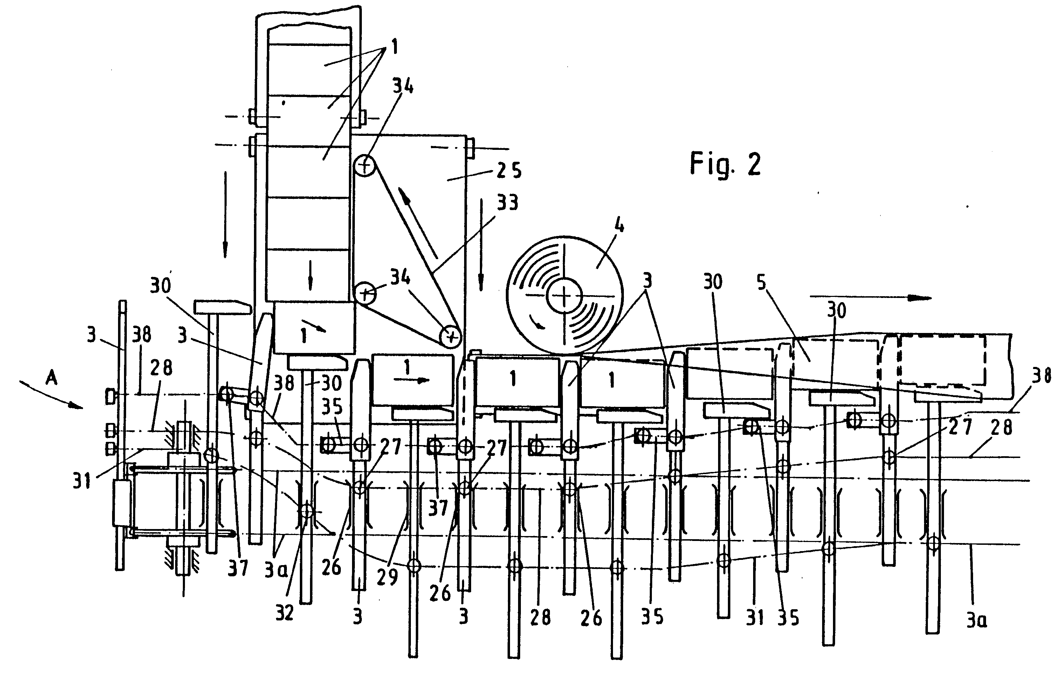

Die erfindungsgemäße Einrichtung ist in den Fig. 2 bis 6 im einzelnen wiedergegeben. Dabei ist dem Schlauchbildner 4, 5 ein Zubringer 25 in Form eines flachen Bandes, welches gemäß Fig. 2 in Pfeilrichtung quer zum Förderband 2 umläuft, vorgeschaltet. Auf dem Zubringeband werden die Warenstücke 1 in der Pfeilrichtung zugeführt und quer zur Förderrichtung des Bandes 3a zwischen die darauf sitzenden Mitnehmer 3 eingeführt. Zu diesem Zwecke sind die Mitnehmer 3 in Führungen 26 auf dem Förderorgan 3a quer zur Förderrichtung des Bandes verschiebbar gehalten. Diese Querverschiebung wird dadurch herbeigeführt, daß sich die Mitnehmer 3 mit einer Führungsrolle 27 in einer Führungsbahn, wie Nutkurve 28 od. dgl., führen, die in Fig. 2 durch strichpunktierte Linien angedeutet ist. Zwischen den Mitnehmern 3 sind auf dem Förderorgan 3a weitere Führungen 29 vorgesehen, in denen sich Pufferglieder 30 mit ihrem Schaft, ebenfalls quer zur Förderrichtung, verschiebbar führen, wobei sie sich ebenfalls in einer Kurvenführung 31 mit Führungsrollen 32 führen (vgl. Fig. 6).

Die Führungsbahnen 28 und 31 erstrecken sich über die gesamte Länge des Förderorganes 3a und sind so ausgebildet, daß unmittelbar vor dem Zubringer 25 die Mitnehmer 3 so weit ausgeschoben werden, daß sie bei der Vorwärtsbewegung des Transportorgans 3a jeweils das vorderste im Zubringer 25 ankommende Warenstück erfassen und nach der Seite hin mitnehmen, wie dies in Fig. 2 gezeigt ist. Andererseits werden die Puffer 30 so gesteuert, daß sie sich bei der Übergabe der Warenstücke aus dem Zubringer 25 zwischen die Mitnehmer 3 an eine Seite der Warenstücke 1 anlegen und diese beim Überführen in den Schlauchbildner halten und so ausrichten, daß sie ordnungsgemäß in den Folienschlauch 5 einlaufen, wobei sie vom Staudruck der weiteren Warenstücke entlastet sind.

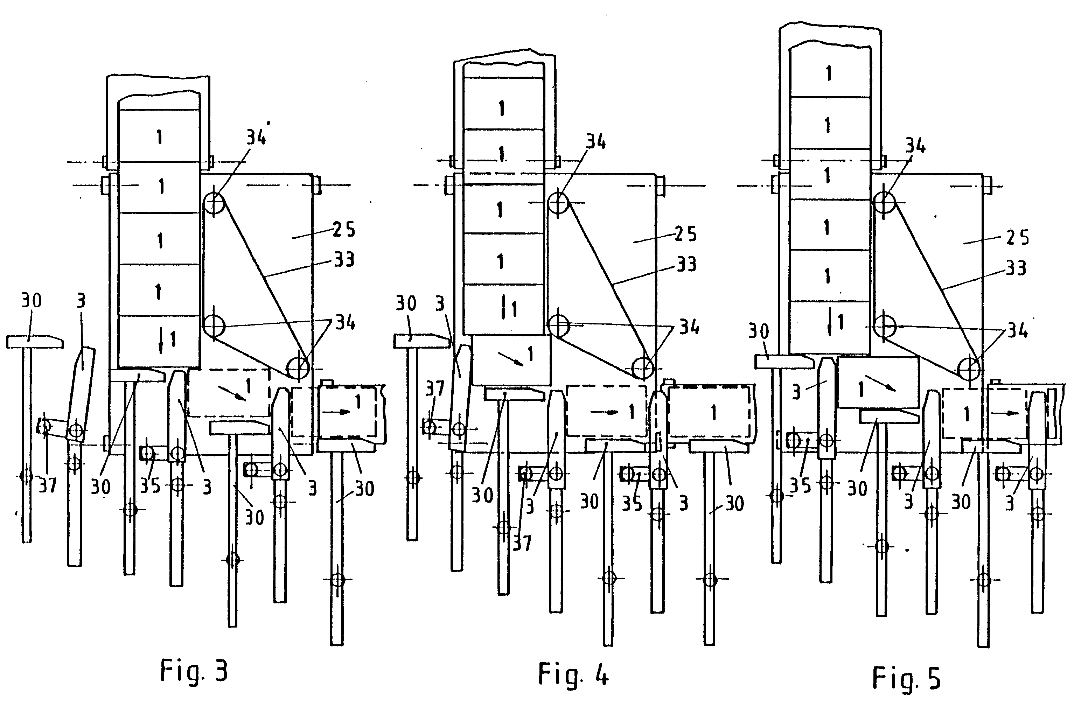

Der Vorgang der aufeinanderfolgenden Überführung der Warenstücke aus dem Zubringer 25 zwischen die Mitnehmer 3 des Transportorgans 3a geht so vor sich, wie es die Fig. 3 bis 5 in aufeinanderfolgenden Arbeitsstellungen erkennen lassen. Mit Hilfe eines seitlich angeordneten, weiteren Leitbandes 33, welches über die drei Rollen 34 (Fig. 2) läuft, können die Warenstücke, falls erforderlich, auch noch auf der Gegenseite gehalten und geführt werden.

Um die Entlastung vom Staudruck der auf dem Zubringer 25 nachfolgenden Warenstücke zu erreichen, sind die Oberteile der Mitnehmer 3 mit ihrem zugehörigem Schaft gelenkig verbunden und mit einem seitlichen Vorsprung 35 versehen, der sich mit einer Führungsrolle 37 in einer Kurvenführung 38 führt und durch diese entsprechend gesteuert wird. Die gesamte Bewegung der Mitnehmer und der Puffer wird durch die Kurvenführungen 28, 31 und 38 gesteuert. Bei den Führungen kann es sich um Nutkurven handeln, in die die Laufrollen 27 bzw. 32 eingreifen (Fig. 6). Die Nutkurven können dabei in einer Deckplatte 36 vorgesehen sein, die sich längs des Transportorgans 3a, über diesem liegend, erstrecken.

Wichtig ist fernerhin, daß die Mitnehmer 3 durch die Führung 28 so gesteuert werden, daß sie rechtzeitig vor dem Schließen des Hüllmaterialschlauches aus diesem zurückgezogen werden, um schließlich wieder in ihre noch vor dem Zubringer 25 liegende Ausgangsstellung zu gelangen und ein neues Warenstück 1 zu übernehmen.

Selbstverständlich ist die Erfindung nicht allein auf das Verpacken von Schokoladetafeln oder -riegeln beschränkt, es können vielmehr in der gleichen Weise, wie beschrieben, die verschiedensten Warenstücke mit einer über einen Hüllmaterialschlauch herzustellende, dicht schließende Verpackungen kontinuierlich erzeugt werden.

**Patentansprüche**

1. Vorrichtung zum kontinuierlichen Zuführen von im wesentlichen quaderförmigen, flachen Warenstücken, insb. Schokoladetafeln oder -riegeln, bei einer die Warenstücke (1) in einen horizontal geführten Hüllmaterialschlauch (5) einhüllenden Packmaschine, in der ein quer zur Haupttransportrichtung verlaufender Zubringer (25) die Warenstücke (1) in einen endlos, in konstanter Geschwindigkeit umlaufenden, mit seitlich vorragenden Mitnehmern (3) versehenen Förderer (3a) übergibt, dadurch gekennzeichnet, daß die Mitnehmer (3) des endlosen Förderers (3a) quer zu dessen Förderrichtung in den Aus-

580** 6

laufbereich des Zubringers (25) hinein und wieder zurück gesteuert verschiebbar ausgebildet sind und die erfaßten Warenstücke (1) in den Schlauchbildner (4, 5) überführen und daß am endlosen Förderer (3a) jeweils zwischen den Mitnehmern (3) entsprechend quer zu dessen Förderrichtung gesteuerte Puffer (30) für die auf dem Zubringer (25) ankommenden Warenstücke (1) vorgesehen sind.

2. Vorrichtung nach Anspruch 1, dadurch gekennzeichnet, daß eine die Puffer (30) und die Mitnehmer (3) steuernde Vorrichtung vorgesehen ist, um das jeweils vorderste Warenstück (1) aus dem Zubringer (25) vermittels des jeweiligen Puffers (30) ohne den Staudruck der folgenden Warenstücke (1) bei der Querbewegung der Mitnehmer (3) abzuführen.

3. Vorrichtung nach Anspruch 1 und 2, dadurch gekennzeichnet, daß an sich bekannte Schließorgane vorgesehen sind, die nach Entfernung der Mitnehmer (3) die Längsränder des Hüllmaterialschlauches (4, 5) durch Verschweißung oder Verklebung miteinander verbinden, und daß der Zubringer (25) vor dem Schlauchbildner (4, 5) angeordnet ist und die Mitnehmer (3) mittels einer Steuereinrichtung (27, 28) gegenüber dem sie tragenden Transportorgan (3a) quer zu dessen Förderrichtung bis in den Arbeitsbereich des Zubringers (25) verschiebbar, mit dem erfaßten Warenstück (1) zunächst bis in den Einzugsbereich des Schlauchbildners (4, 5) zurückziehbar und nach erfolgter Schlauchbildung aus dem Schlauch (5) vor dessen Verschluß entfernbar sind.

4. Vorrichtung nach Anspruch 3, dadurch gekennzeichnet, daß die Mitnehmer (3) in Führungen (26) quer auf dem sie tragenden Transportorgan (3a) verschiebbar geführt und an eine sie betätigende Steuereinrichtung (27, 28) angeschlossen sind.

5. Vorrichtung nach Anspruch 4, dadurch gekennzeichnet, daß die Steuereinrichtung (27, 28) für die Mitnehmer (3) aus einer sich über die Länge des Förderorgans (3a) hinwegerstreckenden Kurvenführung, wie z. B. Nutkurve (28), und aus in diese einfassenden, am Schaft der Mitnehmer (3) sitzenden Laufrollen (27) gebildet ist.

6. Vorrichtung nach Anspruch 1 bis 5, dadurch gekennnzeichnet, daß die Puffer (30) auf dem die Mitnehmer (3) tragenden Transportorgan (3a) quer verschiebbar angeordnet sind und mit ihrem Kopf die in den Zubringer (25) zulaufenden Warenstücke (1) einseitig abstützen, bevor das vorderste Warenstück (1) durch den jeweiligen Mitnehmer (3) seitlich erfaßt wird.

7. Vorrichtung nach Anspruch 6, dadurch gekennzeichnet, daß für die Steuerung der Puffer (30) eine sich in Förderrichtung erstreckende Kurvenführung (31) vorgesehen ist, in der sich die Puffer mit entsprechenden Führungsrollen führen.

8. Vorrichtung nach Anspruch 1 bis 7, dadurch gekennzeichnet, daß seitlich von dem Zubringer (25) eine Leitvorrichtung (33, 34) zur weiteren Einsteuerung der Warenstücke (1) in Richtung des Hüllmaterialschlauches (5) vorgesehen ist.

**Claims**

1. Apparatus for the continuous advancing of substantially parallelepipedonal flat pieces of goods, in particular bars or blocks of chocolate, in a packaging machine, which envelops the pieces of goods (1) in an horizontally guided wrapping material hose (5) and in which a feeder (25) extending transversely to the main transport direction transfers the pieces of goods (1) into an endless conveyor (3a) provided with laterally protruding entraining members (3) and circulating at constant speed, characterised thereby, that the entraining members (3) of the endless conveyor (3a) are constructed to be controlledly displaceable transversely to its conveying direction into the outlet region of the feeder (25) and back again and pass the seized pieces of goods (1) over into the hose-forming device (4, 5) and that buffers (30) are provided at the endless conveyor (3a), appropriately controlled transversely to its conveying direction and each time between the entraining members (3), for the pieces of goods (1) arriving on the feeder (25).

2. Apparatus according to claim 1, characterised thereby, that a device controlling the buffers (30) and the entraining members (3) is provided in order on the transverse movement of the entraining members (3) to remove the respectively foremost piece of goods (1) from the feeder (25) by means of the respective buffer (30) and without the ramming pressure of the following pieces of goods (1).

3. Apparatus according to claim 1 and 2, characterised thereby, that in themselves known closing organs are provided, which after removal of the entraining members (3) connect the longitudinal rims of the wrapping material hose (4, 5) each with the other by welding or gluing together and that the feeder (25) is arranged ahead of the hose-forming device (4, 5) and the entraining members (3) are displaceable by means of a control equipment (27, 28) relative to the transport organ (3a) carrying them and transversely to its conveying direction into the operating range of the feeder (25), initially withdrawable together with the seized piece of goods (1) into the intake region of the hose-forming device (4, 5) and removable from the hose (5) after formation of the hose has taken place and before the closure thereof.

4. Apparatus according to claim 3, characterised thereby, that the entraining members (3) are guided in guides (26) to be displaceable transversely on the transport organ (3a) carrying them and connected to a control equipment (27, 28) actuating them.

5. Apparatus according to claim 4, characterised thereby, that the control equipment (27, 28) for the entraining members (3) is formed of a cam guide, such as for example grooved cam (28), extending over the length of the conveying organ

4

(3a), and of runners (27) engaging into these and sitting at the shaft of the entraining members (3).

6. Apparatus according to claim 1 to 5, characterised thereby, that the buffers (30) are arranged to be displaceable transversely on the transport organ (3a) carrying the entraining members (3) and by their heads support at one side the pieces of goods (1) running into the feeder (25) before the foremost piece of goods (1) is seized laterally by the respective entraining member (3).

7. Apparatus according to claim 6, characterised thereby, that a cam guide (31), which extends in conveying direction and in which the buffers are guided by corresponding guide rollers, is provided for the control of the buffers (30).

8. Apparatus according to claim 1 to 7, characterised thereby, that a guide device (33, 34) for the further steering of the pieces of goods (1) in the direction of the wrapping material hose (5) is provided laterally of the feeder (25).

## Revendications

1. Installation destinée à l'alimentation continue en marchandises essentiellement constituées par des pièces plates de forme parallélépipédique, en particulier de tablettes ou de barres de chocolat, d'une machine à emballer enveloppant les unités de marchandise (1) dans un tube de matériau d'emballage (5) passant horizontalement, dans laquelle machine un organe d'amenage (25) transfère les pièces de marchandise (1) dans un convoyeur (3a) sans fin tournant à vitesse constante, caractérisée par le fait que les organes d'entraînement (3) du convoyeur sans fin (3a) sont commandés de façon à se déplacer transversalement à la direction de déplacement de ce dernier pour entrer dans, et sortir de, la zone d'évacuation de l'organe d'amenage (25), et ils introduisent, dans le dispositif de mise en forme du tube (4, 5), les unités de marchandise (1) saisies, et que sur le convoyeur (3a) sans fin il est prévu, dans chaque cas entre les organes d'entraînement (3), des tampons (30) commandés de façon correspondante transversalement à la direction de déplacement de ce dernier, et destinée aux unités de marchandise (1) arrivant sur le dispositif d'amenage (25).

2. Installation selon la revendication 1, caractérisée par le fait que l'on prévoit un dispositif qui commande les tampons (30) et les organes d'entraînement (3), en vue d'évacuer dans chaque cas l'unité de marchandise (1) de devant, de l'organe d'amenage (25) au moyen du tampon (30) correspondant sans qu'elle soit soumise à la pression de retenue des unités de marchandise (1) suivantes, lors du mouvement transversal des organes d'entraînement (3).

3. Installation selon la revendication 1, caractérisée par le fait que des organes de fermeture connus en eux-mêmes sont prévus, qui assemblent, après éloignement des organes d'entraînement (3), les bords longitudinaux du tube (4, 5) de matériau d'emballage par soudure ou par collage, et l'organe d'amenage (25) est disposé devant le dispositif de mise en forme (4, 5) du tube, et les organes d'entraînement (3) peuvent se déplacer au moyen d'un dispositif (27, 28) de commande par rapport à l'organe de transport (3a) qui les porte, transversalement à la direction de déplacement de ce dernier, jusque dans la zone de travail de l'organe d'amenage (25), peuvent être retirés avec l'unité de marchandise (1) saisie d'abord dans la zone d'entrée du dispositif de mise en forme (4, 5) du tuyau, et ensuite, lorsque le tube a été fermé, peuvent être mises à l'écart du tube (5) avant la fermeture de ce dernier.

4. Installation selon la revendication 3, caractérisée par le fait que les organes d'entraînement 3 peuvent être guidés de façon coulissante dans des organes de guidage (26) transversalement sur l'organe de transport (3a) qui les porte et sont raccordés à un dispositif (27, 28) de commande qui les actionne.

5. Installation selon la revendication 4, caractérisée par le fait que le dispositif de commande (27, 28), destiné aux organes d'entraînement (3), est formé par un organe de guidage courbe, par exemple une gorge courbe (28), qui s'étend sur toute la longueur de l'organe de transport (3a), et de galets (27) montés sur l'arbre des organes d'entraînement et qui s'engagent dans cette dernière.

6. Installation selon les revendications 1 à 5, caractérisée par le fait que les tampons (30) sont disposés de façon à pouvoir se déplacer transversalement sur l'organe de transport (3a), qui porte les organes d'entraînement (3) et appuient avec leur tête d'un côté sur les unités de marchandise (1) délivrées dans l'organe d'amenage (21), avant que la pièce de marchandise (1) située le plus en avant soit saisie par le côté grâce à l'organe d'entraînement (3) correspondant.

7. Installation selon la revendication 6, caractérisée par le fait que, pour la commande des tampons (30), on prévoit un organe de guidage (31) courbe s'étendant dans la direction de transport, et dans lequel les tampons sont guidés au moyen de galets de guidage correspondants.

8. Installation selon les revendications 1 à 7, caractérisée par le fait que, latéralement à l'organe d'amenage (25), il est prévu un dispositif de guidage (33, 34) destiné à un guidage supplémentaire des unités de marchandise (1) en direction du tube (5) de matériau d'emballage.

Fig. 1

Fig. 6

Fig. 2

0 167 580

Fig. 5

Fig. 4

Fig. 3